# FASCICULE DE BREVET EUROPEEN

(11) **EP 3 028 545 B1**
(45) Date de publication et mention de la délivrance du brevet: **03.05.2017**
(21) Numéro de dépôt: 14750545.7
(22) Date de dépôt: 25.06.2014
(51) Int. Cl.: H05B 33/08

(54) **DISPOSITIF A DIODES ELECTROLUMINESCENTES**
LEUCHTDIODENVORRICHTUNG
LIGHT-EMITTING DIODE DEVICE

(30) Priorité: 02.08.2013 FR 1357696
(43) Date de publication de la demande: 08.06.2016
(73) Titulaire: Renault S.A.S., 92100 Boulogne-Billancourt (FR)
(72) Inventeur: MAADED, Christophe, F-92500 Rueil Malmaison (FR); CARREAU, Vincent, F-75014 Paris (FR); EL HABIBI, Abdelhak, F-28500 Sainte Gemme Moronval (FR)
(86) Numéro de dépôt international: PCT/FR2014/051585
(87) Numéro de publication internationale: WO 2015/015071

(56) Documents cités:
- US-A1- 2007 131 945
- US-A1- 2011 043 114
- US-A1- 2012 074 947

## Description

### DOMAINE TECHNIQUE AUQUEL SE RAPPORTE L'INVENTION

La présente invention concerne de manière générale le domaine des éclairages à diodes électroluminescentes.

Elle concerne plus particulièrement un dispositif à diodes électroluminescentes comportant, d'une part, au moins deux branches montées électriquement en parallèle et comprenant chacune une diode électroluminescente, dont une première branche comprenant une première diode électroluminescente et une deuxième branche comprenant une deuxième diode électroluminescente, et, d'autre part, un moyen de détection adapté à détecter une défaillance de ladite première diode électroluminescente.

L'invention concerne par ailleurs un ensemble de dispositifs à diodes électroluminescentes tels que précités, montés électriquement en série les uns avec les autres.

### ARRIERE-PLAN TECHNOLOGIQUE

On connaît notamment du document US 2008/0204029 un dispositif à diodes électroluminescentes comportant plusieurs branches qui sont montées électriquement en parallèle et qui comprennent chacune plusieurs diodes électroluminescentes en série.

Ce dispositif comporte également :
- un circuit de mesure qui mesure la puissance, le courant ou la tension dans chaque branche du dispositif à diodes électroluminescentes, et
- un circuit de commande couplé au circuit de mesure, qui délivre un signal de contrôle si la puissance, le courant ou la tension mesurée dans l'une des branches dépasse une valeur seuil prédéterminée.

De cette façon, une éventuelle défaillance d'une ou plusieurs des diodes électroluminescentes du dispositif peut être détectée, et la branche comportant la ou les diodes électroluminescentes défaillantes peut être éteinte.

On comprend alors que l'extinction de la totalité de la branche comportant la ou les diodes électroluminescentes défaillantes entraîne une augmentation de l'intensité du courant traversant les autres branches, au risque de dégrader les diodes électroluminescentes de ces autres branches, et d'en réduire la durée de vie.

Le document US 2007/013945 A1 divulgue un dispositif selon le préambule de la revendication 1.

### OBJET DE L'INVENTION

Afin de remédier à l'inconvénient précité de l'état de la technique, la présente invention propose un dispositif à diodes électroluminescentes qui, lors de la défaillance d'une diode électroluminescente, permet de protéger les autres diodes électroluminescentes d'un vieillissement accéléré ou d'une défaillance prématurée.

Plus particulièrement, on propose selon l'invention un dispositif à diodes électroluminescentes tel que défini en introduction, comportant :
- un régulateur de courant monté électriquement en dérivation de ladite première diode électroluminescente, et
- un circuit de commutation commandé par ledit moyen de détection pour bloquer alternativement le courant passant par ladite première diode électroluminescente ou ledit régulateur de courant, selon respectivement que ledit moyen de détection détecte ou non une défaillance de ladite première diode électroluminescente.

Ce dispositif à diodes électroluminescentes est donc conçu pour, lors de la détection d'une défaillance de la première diode électroluminescente par le moyen de détection, maintenir un courant circulant dans la première branche.

À cet effet, le moyen de détection qui détecte la défaillance de la première diode électroluminescente commande :
- le circuit de commutation pour ouvrir la portion de la première branche portant la première diode électroluminescente et fermer la portion de la première branche portant le régulateur de courant, et
- le régulateur de courant pour maintenir un courant dans la première branche.

Ainsi, la continuité du fonctionnement du dispositif à diodes électroluminescentes est assurée même lorsque la première diode électroluminescente est défaillante, puisque la deuxième diode électroluminescente reste alimentée par un courant sensiblement égal à celui avant défaillance.

De cette manière, la deuxième diode électroluminescente continue de fonctionner normalement et est préservée d'un vieillissement ou d'un risque accru de défaillance.

D'autres caractéristiques non limitatives et avantageuses du dispositif à diodes électroluminescentes conforme à l'invention sont les suivantes :
- le régulateur de courant est un générateur de courant commandé par ledit moyen de détection ;
- ledit moyen de détection comporte un système d'identification d'un état en circuit ouvert de ladite première diode électroluminescente ;
- ledit circuit de détection délivre audit circuit de commutation une tension de détection dont la valeur est fonction du résultat d'une comparaison entre une valeur mesurée de la tension aux bornes de ladite première diode électroluminescente et une tension de référence en circuit ouvert ;
- ledit moyen de détection comporte un système d'identification d'un état en court-circuit de ladite première diode électroluminescente ;
- ledit circuit de détection délivre audit circuit de commutation une tension de détection dont la valeur est fonction du résultat d'une comparaison entre une valeur mesurée de la tension aux bornes de ladite première diode électroluminescente et une tension de référence en court-circuit ;
- ladite première branche comporte une résistance d'équilibrage montée électriquement en série dudit régulateur de courant ;
- ladite première branche comporte une résistance de compensation montée électriquement en série avec un circuit secondaire qui comprend ledit régulateur de courant et ladite première diode électroluminescente ;
- ledit dispositif à diodes électroluminescentes comporte également :
   - un autre moyen de détection adapté à détecter une défaillance de ladite deuxième diode électroluminescente,
   - un autre régulateur de courant monté en parallèle de ladite deuxième diode électroluminescente, et
   - un autre circuit de commutation commandé par ledit autre moyen de détection pour bloquer alternativement le courant passant dans ladite deuxième diode électroluminescente ou dans ledit autre régulateur de courant, selon respectivement que l'autre moyen de détection détecte ou non une défaillance de ladite deuxième diode électroluminescente.

L'invention trouve une application particulièrement avantageuse pour la réalisation d'un arrangement série-parallèle de diodes électroluminescentes.

Ainsi, l'invention propose également un ensemble de dispositifs à diodes électroluminescentes comportant une pluralité de dispositifs à diodes électroluminescentes conforme à l'invention, lesdits dispositifs à diodes électroluminescentes étant montés électriquement en série les uns avec les autres.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 A est un schéma électrique d'un dispositif à diodes électroluminescentes selon un premier mode de réalisation de l'invention, comportant deux diodes électroluminescentes ;
- la figure 1 B est un schéma électrique équivalent du dispositif à diodes électroluminescentes de la figure 1 A lorsque les deux diodes électroluminescentes fonctionnent correctement ;
- la figure 1C est un schéma électrique équivalent du dispositif à diodes électroluminescentes de la figure 1 A lorsque l'une des deux diodes électroluminescentes présente une défaillance ;
- la figure 2 est un schéma électrique de détail de la première diode électroluminescente et du moyen de détection du dispositif à diodes électroluminescentes de la figure 1 A ;
- la figure 3 est un schéma électrique d'un dispositif à diodes électroluminescentes selon un deuxième mode de réalisation de l'invention ;
- la figure 4 est un schéma électrique d'un ensemble de dispositifs à diodes électroluminescentes montés en série.

En préambule, on notera que les éléments identiques ou similaires des différents modes de réalisation représentés sur les différentes figures seront référencés par les mêmes signes de référence et ne seront pas décrits à chaque fois.

Dans la description, le terme « en parallèle » et « en dérivation » seront utilisés pour désigner deux types de montages électriques.

Deux éléments montés en parallèle seront connectés à chacune de leurs bornes par des noeuds communs. Ils présenteront ainsi une tension identique à leurs bornes.

Deux éléments montés en dérivation seront, quant à eux, situés dans deux branches montées en parallèle, l'une ou l'autre de ces branches pouvant par ailleurs accueillir d'autres composants électriques, les tensions aux bornes de ces deux éléments pourront alors être différentes.

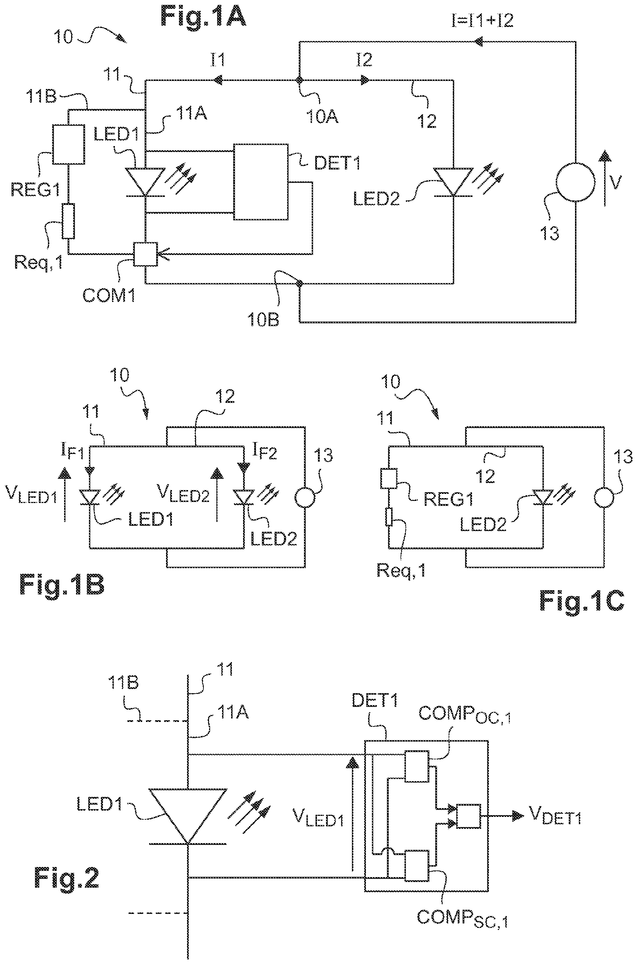

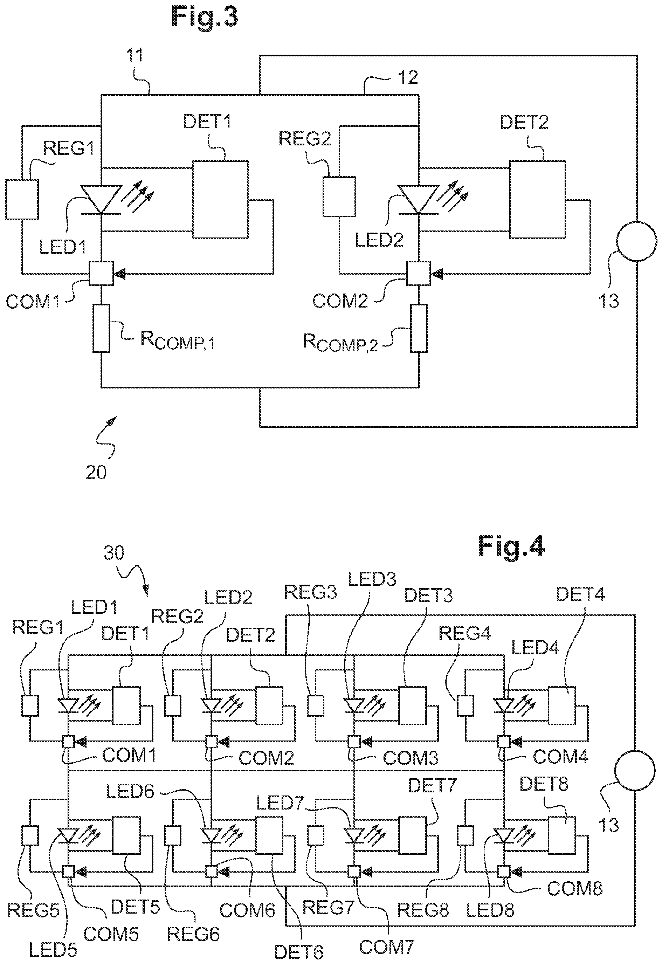

On a représenté sur les figures 1 A et 3 des dispositifs à diodes électroluminescentes pouvant faire partie d'un ensemble plus général tel qu'un système d'éclairage extérieur pour un véhicule automobile, par exemple un phare de croisement, un phare de route, ou encore un phare de signalisation du type DRL (pour « *Daytime Running Lamp* » en anglais).

La technologie DEL, acronyme de « diode électro-luminescente » (encore dénommée « LED » pour « *Light-Emitting Diode* » en anglais), est de plus en plus présente dans les véhicules automobiles parce qu'elle offre une consommation électrique réduite et une durée de vie accrue par rapport aux lampes classiques utilisées jusqu'à présent, comme les lampes à incandescence ou les lampes halogènes.

De plus, les diodes électroluminescentes offrent de larges possibilités de mise en forme de faisceaux optiques car les diodes électroluminescentes sont des sources lumineuses de petite taille.

L'intégration de diodes électroluminescentes dans des systèmes d'éclairage automobile tels que des feux de position, de croisement, de route, des feux antibrouillard, des feux de signalisation, offre au conducteur du véhicule automobile une meilleure visibilité de la route et une meilleure signalisation, et offre au constructeur automobile plus de liberté dans la conception de ses systèmes d'éclairage.

Les dispositifs à diodes électroluminescentes 10, 20 des figures 1 A et 3, sont soumis à des conditions thermiques et électriques contraignantes qui sont susceptibles de détériorer les diodes électroluminescentes.

La défaillance d'une ou plusieurs diodes électroluminescentes peut avoir de lourdes conséquences pour le conducteur, par exemple lors d'une conduite de nuit, puisque ces défaillances conduisent à perdre tout ou partie du flux lumineux émis par le dispositif à diodes électroluminescentes.

C'est un des objectifs de l'invention que de proposer un dispositif à diodes électroluminescentes, dans lequel la défaillance d'une diode électroluminescente n'entraîne pas de défaillances sur les autres diodes électroluminescentes.

Comme le montre par exemple la figure 1 A, le dispositif à diodes électroluminescentes, ci-après désigné « *dispositif à DELs* » et référencé 10, comporte au moins deux branches 11, 12 qui sont montées électriquement en parallèle.

Une alimentation électrique 13, branchée entre un point d'entrée 10A et un point de sortie 10B du dispositif à DELs 10, fournit l'énergie électrique nécessaire au fonctionnement du dispositif à DELs 10.

Plus précisément ici, cette alimentation électrique 13 est un régulateur de courant qui maintient une tension d'alimentation V prédéterminée aux bornes du dispositif à DELs 10, c'est-à-dire entre le point d'entrée 10A et le point de sortie 10B, et délivre un courant d'alimentation d'intensité I. Ce courant d'alimentation est indépendant de la tension d'alimentation V et est fixé en fonction des différents composants électriques présents dans la première branche 11 et la deuxième branche 12, et en fonction du niveau de flux lumineux que le dispositif à DELs 10 doit émettre.

En variante, l'alimentation électrique pourrait être un régulateur de tension qui pilote en tension le dispositif à DELs.

Chaque branche 11, 12 comporte ici une diode électroluminescente.

En variante, les différentes branches du dispositif à DELs pourraient par exemple comporter plusieurs diodes électroluminescentes en série.

Il est en outre prévu un premier moyen de détection DET1 pour détecter une défaillance d'au moins une première diode électroluminescente LED1.

Il est également prévu, et c'est d'ailleurs l'objet de la présente invention, des moyens pour pallier une défaillance de cette première diode électroluminescente LED1, de manière que les courants traversant les autres diodes électroluminescentes ne soient pas ou peu impactés par cette défaillance.

Ainsi, selon une caractéristique particulièrement avantageuse de l'invention, le dispositif à DELs 10, 20 comporte en outre :
- un régulateur de courant REG1 monté électriquement en dérivation de la première diode électroluminescente LED1, et
- un circuit de commutation COM1 commandé par le moyen de détection DET1 pour bloquer alternativement le courant passant par la première diode électroluminescente LED1 ou par le régulateur de courant REG1, selon respectivement que le moyen de détection DET1 détecte ou non une défaillance de ladite première diode électroluminescente LED1.

Le régulateur de courant REG1 va permettre de consommer sensiblement la même puissance que celle qui était consommée par la première diode électroluminescente LED1 avant sa défaillance. Le circuit de commutation COM1 va, quant à lui, permettre de débrancher la première diode électroluminescente LED1 et de brancher, en lieu et place de celle-ci, le régulateur de courant REG1.

Dans le premier mode de réalisation de l'invention représenté sur la figure 1 A, le dispositif à DELs 10 comprend uniquement deux branches 11, 12. Ce mode de réalisation est principalement décrit et représenté pour illustrer de manière simple le fonctionnement de l'invention.

Comme représenté sur la figure 1 A, le courant d'alimentation I parcourant le dispositif à DELs 10, alimenté par la source d'alimentation 13, se décompose alors en la somme :
- d'un premier courant I1 circulant dans la première branche 11, et
- d'un deuxième courant I2 circulant dans la deuxième branche 12.

Dans le premier mode de réalisation, chaque branche 11, 12 comprend ici une seule diode électroluminescente : la première branche 11 comprend une première diode électroluminescente LED1 placée sur une première portion 11A de la première branche 11 et la deuxième branche 12 comprend une deuxième diode électroluminescente LED2.

La première diode électroluminescente LED1 et la deuxième diode électroluminescente LED2 peuvent présenter des caractéristiques optiques (flux lumineux, spectre en longueurs d'onde, température de couleur, *etc...*) identiques ou différentes.

De la même manière, la première diode électroluminescente LED1 et la deuxième diode électroluminescente LED2 peuvent présenter des caractéristiques électriques identiques ou différentes.

On considérera ici qu'elles sont différentes.

Afin de comprendre le fonctionnement électrique du dispositif à DELs 10 de la figure 1 A, on a représenté sur la figure 1 B un schéma électrique équivalent du dispositif à DELs 10 lorsque les deux diodes électroluminescentes LED1, LED2 fonctionnent sans défaillance.

Sans défaillance, la première diode électroluminescente LED1, la deuxième diode électroluminescente LED2, et l'alimentation électrique 13 sont branchées en parallèle.

La tension V_{LED1} aux bornes de la première diode électroluminescente LED1 et la deuxième tension V_{LED2} aux bornes de la deuxième diode électroluminescente LED2 sont égales à la tension d'alimentation V.

Les caractéristiques électriques des diodes électroluminescentes LED1, LED2 étant ici légèrement différentes, le premier courant direct I_{F1} traversant la première diode électroluminescente LED1 et le deuxième courant direct I_{F2} traversant la deuxième diode électroluminescente LED2 peuvent être différents.

Une diode électroluminescente peut présenter une défaillance entraînant alors son extinction ou son claquage.

La première diode électroluminescente LED1 peut ainsi présenter, par exemple, une défaillance en circuit ouvert. Dans ce cas, le passage du courant dans la première portion 11 A de la première branche 11 est interrompu et la tension V_{LED1} aux bornes de la première diode électroluminescente LED1 augmente transitoirement. Le risque est alors que la totalité du courant d'alimentation I passe dans la deuxième branche 12, ce qui provoquerait l'augmentation du courant circulant au travers de la deuxième diode électroluminescente LED2 et pourrait provoquer la dégradation de celle-ci.

La première diode électroluminescente LED1 peut, au contraire, présenter une défaillance en court-circuit. Dans ce cas, le passage du courant dans la première portion 11 A de la première branche 11 se fait sans résistance et la deuxième diode électroluminescente LED2 est mise en court-circuit et n'émet plus de lumière. Ainsi, le dispositif à DELs 10 est rendu inopérant.

De manière générale, toute défaillance de la première diode électroluminescente LED1 se traduit par une variation de la tension V_{LED1} à ses bornes.

On va voir maintenant comment le dispositif à DELs 10 selon l'invention permet, lorsque la première diode électroluminescente LED1 présente une défaillance, de maintenir l'intensité du deuxième courant I2 traversant la deuxième branche 12 à une valeur proche de sa valeur avant la défaillance de la première diode électroluminescente LED1.

Comme représenté sur la figure 2, le premier moyen de détection DET1 est monté aux bornes de la première diode électroluminescente LED1 pour mesurer la valeur de la tension V_{LED1} aux bornes de la première diode électroluminescente LED1.

Afin de détecter une éventuelle défaillance en circuit ouvert de la première diode électroluminescente LED1, le premier moyen de détection DET1 comporte en outre (voir figure 2) un système d'identification d'un état en circuit ouvert COMP_{OC,1} et un système d'identification d'un état en court-circuit COMP_{SC,1} de la première diode électroluminescente LED1.

Le système d'identification d'un état en circuit ouvert COMP_{OC,1} comprend ici un comparateur de tension qui compare la valeur mesurée de la tension V_{LED1} aux bornes de la première diode électroluminescente LED1 à une tension de référence en circuit ouvert V_{OC,REF}.

Par exemple, pour une première diode électroluminescente LED1 dont la tension directe V_{F1} de fonctionnement est comprise entre 3V et 4V, la tension de référence en circuit ouvert V_{OC,REF} sera choisie supérieure à V_{f1} et comprise entre 4,5V et 5,5V.

Le système d'identification d'un état en circuit ouvert COMP_{OC,1} délivre en sortie une première tension de détection de circuit ouvert V_{OC,1} fonction du résultat de la comparaison précédente :
- lorsque la tension V_{LED1} aux bornes de la première diode électroluminescente LED1 est inférieure à la tension de référence en circuit ouvert V_{OC,REF}, le système d'identification d'un état en circuit ouvert COMP_{OC,1} délivre une première valeur, par exemple positive, de la première tension de détection de circuit ouvert V_{OC,1}, identifiant ainsi que la première diode électroluminescente LED1 fonctionne correctement, et
- lorsque la tension V_{LED1} aux bornes de la première diode électroluminescente LED1 est supérieure ou égale à la tension de référence en circuit ouvert V_{OC,REF}, le système d'identification d'un état en circuit ouvert COMP_{OC,1} délivre une deuxième valeur, par exemple négative, de la première tension de détection de circuit ouvert V_{OC,1}, identifiant ainsi que la première diode électroluminescente LED1 présente une défaillance.

Le système d'identification d'un état en court-circuit COMP_{SC,1} comprend ici également un comparateur de tension qui compare la valeur mesurée de la tension V_{LED1} aux bornes de la première diode électroluminescente LED1 à une tension de référence en court-circuit V_{SC,REF}.

Cette tension de référence en court-circuit V_{SC,REF} est comprise entre 0V et la tension de seuil de la première diode électroluminescente LED1. Par exemple, pour une première diode électroluminescente LED1 dont la tension de seuil est comprise entre 2,5V et 4V, la tension de référence en court-circuit V_{SC,REF} sera comprise entre 1 V et 2V.

Le système d'identification d'un état en court-circuit COMP_{SC,1} délivre en sortie une première tension de détection de court-circuit V_{SC,1} fonction de la comparaison précédente :
- lorsque la tension V_{LED1} aux bornes de la première diode électroluminescente LED1 est supérieure à la tension de référence en court-circuit V_{SC,REF}, le système d'identification d'un état en court-circuit COMP_{SC,1} délivre une première valeur, par exemple positive, de la première tension de détection de court-circuit V_{SC,1}, identifiant ainsi que la première diode électroluminescente LED1 fonctionne correctement, et
- lorsque la tension V_{LED1} aux bornes de la première diode électroluminescente LED1 est inférieure ou égale à la tension de référence en court-circuit V_{SC,REF}, le système d'identification d'un état en court-circuit COMP_{SC,1} délivre une deuxième valeur, par exemple négative, de la première tension de détection de court-circuit V_{OC,1}, identifiant ainsi que la première diode électroluminescente LED1 présente une défaillance en court-circuit.

En variante, le premier moyen de détection du dispositif à DELs pourrait comprendre soit uniquement un système d'identification d'un état en circuit ouvert, soit uniquement un système d'identification d'un état en court-circuit.

Dans les exemples de dispositifs à DELs 10; 20 représentés sur les figures 1 A à 3, le premier moyen de détection DET1 comprend également un circuit logique LOG1 à deux entrées et une sortie.

En variante, le premier moyen de détection pourrait par exemple comprendre un circuit analogique.

Ce circuit logique LOG1 accepte en entrée la tension de référence en circuit ouvert V_{OC,REF} et la tension de référence en court-circuit V_{SC,REF} et délivre en sortie une tension de détection V_{DET1}.

Ce circuit logique LOG1 peut être par exemple une porte « ET ».

Ainsi monté sur la première branche 11 portant la première diode électroluminescente LED1, le premier moyen de détection DET1 peut détecter une éventuelle défaillance de la première diode électroluminescente LED1, en court-circuit ou en circuit ouvert.

Le régulateur de courant REG1 est monté électriquement en dérivation de la première diode électroluminescente LED1, sur une seconde portion 11B de la première branche 11.

Ce régulateur de courant REG1 est commandé par la tension de détection V_{DET1} délivrée par le premier moyen de détection DET1. On entend par là que le régulateur de courant REG1 est activé par le moyen de détection DET1 et présente deux états électriques différents selon la valeur de la tension de détection V_{DET1}.

En particulier, lorsque la tension de détection V_{DET1} est supérieure à un certain seuil prédéterminé, signe que la première diode électroluminescente LED1 fonctionne correctement, le régulateur de courant REG1 est inactif et est électriquement équivalent à un circuit ouvert dans lequel aucun courant ne circule.

Au contraire, lorsque la tension de détection V_{DET1} est inférieure à ce seuil prédéterminé, signe que la première diode électroluminescente LED1 présente une défaillance, le régulateur de courant REG1 est actif et délivre un courant dans la première branche 11.

Ce régulateur de courant REG1 peut par exemple comprendre un transistor bipolaire monté en série avec une résistance de calibration, la base du transistor, connectée au moyen de détection DET1, étant soumise à la tension de détection V_{DET1} et l'émetteur et le collecteur du transistor étant branchés sur la seconde portion 11 B de la première branche 11.

En variante, le régulateur de courant peut par exemple comprendre un transistor bipolaire et une résistance de calibration montée en parallèle de la jonction entre la base et l'émetteur du transistor.

Le circuit de commutation COM1 est placé à la jonction entre la première portion 11 A et la deuxième portion 11 B de la première branche 11, respectivement après la première diode électroluminescente LED1 et après le régulateur de courant REG1.

En variante, le circuit de commutation peut par exemple être avant la première diode électroluminescente et avant le régulateur de courant.

Ce circuit de commutation COM1 est un composant électrique, comprenant par exemple deux interrupteurs, et présentant deux états électriques différents :
- un premier état où il autorise le passage du courant uniquement dans la première portion 11 A de la première branche 11, et
- un deuxième état où il autorise le passage du courant uniquement dans la deuxième portion 11 B de la première branche 11.

De manière avantageuse, le circuit de commutation COM1 est commandé par le moyen de détection DET1 et se trouve dans le deuxième état, respectivement le premier état, selon que le moyen de détection DET1 détecte ou non une défaillance de la première diode électroluminescente LED1.

Plus précisément, le circuit de détection DET1 délivre au circuit de commutation COM1 la tension de détection V_{DET,1}, la valeur de cette tension de détection V_{DET1} fixant l'état dans lequel se trouve le circuit de commutation COM1 :
- dans le premier état lorsque la tension de détection V_{DET1} est supérieure au seuil prédéterminé, la première diode électroluminescente LED1 fonctionnant correctement, et
- dans le deuxième état lorsque la tension de détection V_{DET1} est inférieure à ce seuil prédéterminé, la première diode électroluminescente LED1 présentant une défaillance.

Ainsi, lorsque la première diode électroluminescente LED1 présente une défaillance, le dispositif à DELs 10 de la figure 1 A est électriquement équivalent au schéma électrique représenté sur la figure 1C.

De manière avantageuse, le régulateur de courant REG1 est choisi de sorte que, lorsqu'il est connecté dans la première branche 11 par le circuit de commutation COM1 commandé par le moyen de détection DET1, il délivre un courant sensiblement égal au courant qui traversait la première diode électroluminescente LED1 avant sa défaillance.

De cette façon, le deuxième courant I2 circulant dans la deuxième branche 12, et traversant la deuxième diode électroluminescente LED2 qui ne présente pas de défaillance, reste sensiblement constant, proche de sa valeur avant la défaillance de la première diode électroluminescente LED1.

Lorsque le régulateur de courant REG1 ne peut pas maintenir à lui seul ce courant dans la deuxième branche 12, il est prévu une résistance d'équilibrage R_{eq,1} montée électriquement en série avec le régulateur de courant REG1.

La résistance d'équilibrage R_{eq,1} peut également permettre de fixer une valeur prédéterminée du courant circulant au travers du régulateur de courant REG1.

En variante, on pourrait choisir un régulateur de courant adapté à maintenir à lui seul ce courant, auquel cas la résistance d'équilibrage ne serait pas nécessaire.

Grâce à l'invention, les risques de vieillissement accéléré ou de défaillance prématurée de cette deuxième diode électroluminescente LED2 sont donc réduits.

Dans un deuxième mode de réalisation représenté sur la figure 4, le dispositif à DELs 20 comporte également un deuxième moyen de détection DET2 qui va, comme le premier moyen de détection DET1, détecter une défaillance de la deuxième diode électroluminescente LED2.

Le dispositif à DELs 20 comporte donc également :
- un deuxième régulateur de courant REG2 monté en parallèle de ladite deuxième diode électroluminescente LED2, et
- un deuxième circuit de commutation COM2 commandé par le deuxième moyen de détection DET2 qui autorise alternativement le passage du courant dans la deuxième diode électroluminescente LED2 ou dans le deuxième régulateur de courant REG2, soit, selon respectivement que le deuxième moyen de détection DET2 détecte ou non une défaillance de cette deuxième diode électroluminescente LED2.

Le fonctionnement de l'autre régulateur de courant REG2 et de l'autre circuit de commutation COM2 est identique à celui du régulateur de courant REG1 et du circuit de commutation COM1.

La durabilité d'un tel dispositif à DELs 20 est ainsi améliorée, puisqu'il permet de pallier une défaillance de l'une ou l'autre des deux diodes électroluminescentes LED1, LED2.

De manière avantageuse, lorsque la première diode électroluminescente LED1 et la deuxième diode électroluminescente LED2 présentent des caractéristiques électriques différentes, en particulier des tensions de fonctionnement différentes, le dispositif à DELs 20 comporte des résistances de compensation R_{comp,1}, R_{comp,2} placées respectivement dans la première et la deuxième branche 11, 12 (voir figure 4), après le premier circuit de commutation COM1 et après le deuxième circuit de commutation COM2, pour ajuster les tensions dans la première branche 11 et la deuxième branche 12, avec ou sans défaillance de l'une des diodes électroluminescentes LED1, LED2.

En variante, le dispositif à DELs peut également comprendre des résistances d'équilibrage montées en série des régulateurs de courant de la première et deuxième branche.

On a représenté sur la figure 4, un ensemble 30 de dispositifs à DELs du type de ceux décrits précédemment.

Cet ensemble 30 est formé d'un arrangement dit « série-parallèle » de deux dispositifs à DELs comprenant chacun quatre diodes électroluminescentes LED1, LED2, LED3, LED4, LED5, LED6, LED7, LED8 (ci-après noté LED1 - LED8) montées en parallèle l'une avec l'autre, les deux dispositifs à DELs étant montés électriquement en série les uns avec les autres.

Un tel ensemble 30 de dispositifs à DELs est également appelé « *matrice 4 x 2 de LEDs ».*

En variante, l'ensemble de dispositifs à DELs peut comporter une pluralité de dispositifs à DELs qui comprennent chacun un nombre différents de diodes électroluminescentes montées en parallèle l'une avec l'autre.

De manière particulièrement avantageuse ici, chaque diode électroluminescente LED1 - LED8 est couplée avec (voir figure 4) un moyen de détection DET1, DET2, DET3, DET4, DET5, DET6, DET7, DET8, un régulateur de courant REG1, REG2, REG3, REG4, REG5, REG6, REG7, REG8, et un circuit de commutation COM1, COM2, COM3, COM4, COM5, COM6, COM7, COM8 fonctionnant ensemble de la même manière que décrit précédemment.

Ainsi, lorsque l'une des diodes électroluminescente LED1 - LED8 présente une défaillance, par exemple en circuit ouvert ou en court-circuit, toutes les autres diodes électroluminescentes continuent de fonctionner, et le flux lumineux total émis par l'ensemble 30 de dispositifs à DELs n'est diminué que du flux lumineux de la diode électroluminescente défaillante.

De plus, les courants traversant les diodes électroluminescentes non défaillantes, restent sensiblement égaux avant et après défaillance de la diode électroluminescente défaillante, ce qui n'affecte pas leur durée de vie.

## Revendications

1. Dispositif à diodes électroluminescentes (10, 20) comportant :
- au moins deux branches (11, 12) montées électriquement en parallèle et comprenant chacune une diode électroluminescente (LED1, LED2), dont une première branche (11) comprenant une première diode électroluminescente (LED1) et une deuxième branche (12) comprenant une deuxième diode électroluminescente (LED2), et
- un premier moyen de détection (DET1) adapté à détecter une défaillance de ladite première diode électroluminescente (LED1),
- un régulateur de courant (REG1) monté électriquement en dérivation de ladite première diode électroluminescente (LED1), **caractérisé en ce qu'**il comporte en outre
- un circuit de commutation (COM1) commandé par ledit moyen de détection (DET1) pour bloquer alternativement le courant passant par ladite première diode électroluminescente (LED1) ou ledit régulateur de courant (REG1), selon respectivement que ledit moyen de détection (DET1) détecte ou non une défaillance de ladite première diode électroluminescente (LED1).

2. Dispositif à diodes électroluminescentes (10, 20) selon la revendication 1, dans lequel le régulateur de courant (REG1) est un générateur de courant commandé par ledit moyen de détection (DET1).

3. Dispositif à diodes électroluminescentes (10, 20) selon l'une des revendications 1 et 2, dans lequel ledit moyen de détection (DET1) comporte un système d'identification d'un état en circuit ouvert (COMP_{OC,1}) de ladite première diode électroluminescente (LED1).

4. Dispositif à diodes électroluminescentes (10, 20) selon la revendication 3, dans lequel ledit circuit de détection (DET1) délivre audit circuit de commutation (COM1) une tension de détection (V_{DET1}) dont la valeur est fonction du résultat d'une comparaison entre une valeur mesurée de la tension (V_{LED1}) aux bornes de ladite première diode électroluminescente (LED1) et une tension de référence en circuit ouvert (V_{OC,REF}).

5. Dispositif à diodes électroluminescentes (10, 20) selon l'une des revendications 1 à 4, dans lequel ledit moyen de détection (DET1) comporte un système d'identification d'un état en court-circuit (COMP_{SC,1}) de ladite première diode électroluminescente (LED1).

6. Dispositif à diodes électroluminescentes (10, 20) selon la revendication 5, dans lequel ledit circuit de détection (DET1) délivre audit circuit de commutation (COM1) une tension de détection (V_{DET1}) dont la valeur est fonction du résultat d'une comparaison entre une valeur mesurée de la tension (V_{LED1}) aux bornes de ladite première diode électroluminescente (LED1) et une tension de référence en court-circuit (V_{SC,REF}).

7. Dispositif à diodes électroluminescentes (10) selon l'une des revendications 1 à 6, dans lequel ladite première branche (11) comporte une résistance d'équilibrage (R_{eq,1}) montée électriquement en série dudit régulateur de courant (REG1).

8. Dispositif à diodes électroluminescentes (20) selon l'une des revendications 1 à 7, dans lequel ladite première branche (11) comporte une résistance de compensation (R_{comp,1}) montée électriquement en série avec un circuit secondaire qui comprend ledit régulateur de courant (REG1) et ladite première diode électroluminescente (LED1).

9. Dispositif à diodes électroluminescentes (20) selon l'une des revendications 1 à 8, comportant également :
- un autre moyen de détection (DET2) adapté à détecter une défaillance de ladite deuxième diode électroluminescente (LED2),
- un autre régulateur de courant (REG2) monté en parallèle de ladite deuxième diode électroluminescente (LED2), et
- un autre circuit de commutation (COM2) commandé par ledit autre moyen de détection (DET2) pour bloquer alternativement le courant passant par ladite deuxième diode électroluminescente (LED2) ou ledit autre régulateur de courant (REG2), selon respectivement que ledit autre moyen de détection (DET2) détecte ou non une défaillance de ladite deuxième diode électroluminescente (LED2).

10. Ensemble (30) de dispositifs à diodes électroluminescentes, **caractérisé en ce qu'**il comporte une pluralité de dispositifs à diodes électroluminescentes selon l'une des revendications 1 à 9 montés électriquement en série les uns avec les autres.

## Patentansprüche

1. Leuchtdiodenvorrichtung (10, 20), die Folgendes umfasst:
- wenigstens zwei Zweige (11, 12), die zueinander elektrisch parallel geschaltet sind und jeweils eine Leuchtdiode (LED1, LED2) enthalten, wovon ein erster Zweig (11) eine erste Leuchtdiode (LED1) enthält und ein zweiter Zweig (12) eine zweite Leuchtdiode (LED2) enthält, und
- erste Detektionsmittel (DET1), die dafür ausgelegt sind, einen Ausfall der ersten Leuchtdiode (LED1) zu detektieren,
- einen Stromregulierer (REG1), der mit der ersten Leuchtdiode (LED1) im Nebenschluss geschaltet ist, **dadurch gekennzeichnet, dass** sie außerdem Folgendes umfasst:
- eine Kommutationsschaltung (COM1), die durch das Detektionsmittel (DET1) gesteuert wird, um abwechselnd den Strom, der durch die erste Leuchtdiode (LED1) oder durch den Stromregulierer (REG1) fließt, zu sperren, je nachdem, ob die Detektionsmittel (DET1) einen Ausfall der ersten Leuchtdiode (LED1) detektieren oder nicht.

2. Leuchtdiodenvorrichtung (10, 20) nach Anspruch 1, wobei der Stromregulierer (REG1) ein Stromgenerator ist, der durch die Detektionsmittel (DET1) gesteuert wird.

3. Leuchtdiodenvorrichtung (10, 20) nach einem der Ansprüche 1 und 2, wobei die Detektionsmittel (DET1) ein System zum Identifizieren eines Zustands (COMP_{OC,1}) mit offenem Kreis der ersten Leuchtdiode (LED1) umfassen.

4. Leuchtdiodenvorrichtung (10, 20) nach Anspruch 3, wobei die Detektionsschaltung (DET1) an die Kommutationsschaltung (COM1) eine Detektionsspannung (V_{DET1}) liefert, deren Wert eine Funktion des Ergebnisses eines Vergleichs zwischen dem gemessenen Wert der Spannung (V_{LED1}) an den Anschlüssen der ersten Leuchtdiode (LED1) und einer Referenzspannung (V_{OC,REF}) bei offenem Kreis ist.

5. Leuchtdiodenvorrichtung (10, 20) nach einem der Ansprüche 1 bis 4, wobei die Detektionsmittel (DET1) ein System zum Identifizieren eines Zustands (COMP_{SC,1}) bei offenem Kreis der ersten Leuchtdiode (LED1) umfassen.

6. Leuchtdiodenvorrichtung (10, 20) nach Anspruch 5, wobei die Detektionsschaltung (DET1) an die Kommutationsschaltung (COM1) eine Detektionsspannung (V_{DET1}) liefert, deren Wert eine Funktion des Ergebnisses eines Vergleichs zwischen einem gemessenen Wert der Spannung (V_{LED1}) an den Anschlüssen der ersten Leuchtdiode (LED1) und einer Referenzspannung (V_{SC,REF}) bei offenem Kreis ist.

7. Leuchtdiodenvorrichtung (10) nach einem der Ansprüche 1 bis 6, wobei der erste Zweig (11) einen Gleichgewichtswiderstand (R_{eq,1}) enthält, der mit dem Stromregulierer (REG1) elektrisch in Reihe geschaltet ist.

8. Leuchtdiodenvorrichtung (20) nach einem der Ansprüche 1 bis 7, wobei der erste Zweig (11) einen Kompensationswiderstand (R_{comp,1}) umfasst, der mit einer sekundären Schaltung, die den Stromregulierer (REG1) und die erste Leuchtdiode (LED1) enthält, elektrisch in Reihe geschaltet ist.

9. Leuchtdiodenvorrichtung (20) nach einem der Ansprüche 1 bis 8, die außerdem Folgendes umfasst:
- weitere Detektionsmittel (DET2), die dafür ausgelegt sind, einen Ausfall der zweiten Leuchtdiode (LED2) zu detektieren,
- einen weiteren Stromregulierer (REG2), der zu der zweiten Leuchtdiode (LED2) parallel geschaltet ist, und
- eine weitere Kommutationsschaltung (COM2), die durch die weiteren Detektionsmittel (DET2) gesteuert wird, um abwechselnd den Strom, der durch die zweite Leuchtdiode (LED2) oder durch den weiteren Stromregulierer (REG2) fließt, zu blockieren, je nachdem, ob die weiteren Detektionsmittel (DET2) einen Ausfall der zweiten Leuchtdiode (LED2) detektieren oder nicht.

10. Anordnung (30) von Leuchtdiodenvorrichtungen, **dadurch gekennzeichnet, dass** sie mehrere Leuchtdiodenvorrichtungen nach einem der Ansprüche 1 bis 9, die miteinander elektrisch in Reihe geschaltet ist, umfasst.

## Claims

1. Light-emitting diode device (10, 20) comprising:
- at least two branches (11, 12) electrically connected in parallel and each comprising a light-emitting diode (LED1, LED2), of which a first branch (11) comprises a first light-emitting diode (LED1) and a second branch (12) comprises a second light-emitting diode (LED2), and
- a first detection means (DET1) designed to detect a failure of said first light-emitting diode (LED1),
- a current regulator (REG1) electrically configured in shunt mode for said first light-emitting diode (LED1),
**characterized in that** it furthermore comprises:
- a switching circuit (COM1) controlled by said detection means (DET1) for alternately blocking the current flowing through said first light-emitting diode (LED1) or said current regulator (REG1), respectively depending on whether said detection means (DET1) detects or does not detect a failure of said first light-emitting diode (LED1).

2. Light-emitting diode device (10, 20) according to Claim 1, in which the current regulator (REG1) is a current generator controlled by said detection means (DET1).

3. Light-emitting diode device (10, 20) according to either of Claims 1 and 2, in which said detection means (DET1) comprises a system for identifying an open-circuit state (COMP_{OC,1}) of said first light-emitting diode (LED1).

4. Light-emitting diode device (10, 20) according to Claim 3, in which said detection circuit (DET1) delivers a detection voltage (V_{DET1}) to said switching circuit (COM1) whose value depends on the result of a comparison between a measured value of the voltage (V_{LED1}) across the terminals of said first light-emitting diode (LED1) and an open-circuit reference voltage (V_{OC,REF}).

5. Light-emitting diode device (10, 20) according to one of Claims 1 to 4, in which said detection means (DET1) comprises a system for identifying a short-circuit state (COMP_{SC,1}) of said first light-emitting diode (LED1).

6. Light-emitting diode device (10, 20) according to Claim 5, in which said detection circuit (DET1) delivers a detection voltage (V_{DET1}) to said switching circuit (COM1) whose value depends on the result of a comparison between a measured value of the voltage (V_{LED1}) across the terminals of said first light-emitting diode (LED1) and a short-circuit reference voltage (V_{SC,REF}).

7. Light-emitting diode device (10) according to one of Claims 1 to 6, in which said first branch (11) comprises a balancing resistor (R_{eq,1}) electrically connected in series with said current regulator (REG1).

8. Light-emitting diode device (20) according to one of Claims 1 to 7, in which said first branch (11) comprises a compensating resistor (R_{comp,1}) electrically connected in series with a secondary circuit which comprises said current regulator (REG1) and said first light-emitting diode (LED1).

9. Light-emitting diode device (20) according to one of Claims 1 to 8, also comprising:
- another detection means (DET2) designed to detect a failure of said second light-emitting diode (LED2),
- another current regulator (REG2) connected in parallel with said second light-emitting diode (LED2), and
- another switching circuit (COM2) controlled by said other detection means (DET2) for alternately blocking the current flowing through said second light-emitting diode (LED2) or said other current regulator (REG2), respectively depending on whether said other detection means (DET2) detects or does not detect a failure of said second light-emitting diode (LED2).

10. Assembly (30) of light-emitting diode devices, **characterized in that** it comprises a plurality of light-emitting diode devices according to one of Claims 1 to 9 electrically connected in series with one another.
